Europäisches Patentamt

European Patent Office

Office européen des brevets

(19)

(11) **EP 0 947 958 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(51) Int Cl.:
*G06T 11/00* *(2006.01)*

(21) Anmeldenummer: **99200884.7**

(22) Anmeldetag: **23.03.1999**

(54) **Verfahren und Anordnung der medizinischen Bilddatenverarbeitung**

Method and apparatus for processing medical image data

Dispositif et méthode pour le traitement de données d'images medicales

(84) Benannte Vertragsstaaten:
**DE FR GB NL**

(30) Priorität: **28.03.1998 DE 19813926**

(43) Veröffentlichungstag der Anmeldung:
**06.10.1999 Patentblatt 1999/40**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB NL**

(72) Erfinder:
• **Rasche, Volker, Dr.**
**22335 Hamburg (DE)**
• **Grass, Michael, Dr.**
**22335 Hamburg (DE)**
• **Braunisch, Henning**
**22335 Hamburg (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
• **RASCHE V.; PROKSA R.; SINKUS R.; BORNERT P.; EGGERS H.: 'Resampling of data between arbitrary grids using convolution interpolation' IEEE TRANS. MED. IMAGING (USA), IEEE TRANSACTIONS ON MEDICAL IMAGING, MAY 1999, IEEE, USA Bd. 18, Nr. 5, Mai 1999, USA, Seiten 385 - 392**
• **O'SULLIVAN J.D.: 'A fast sinc function gridding algorithm for Fourier inversion in computer tomography' IEEE TRANS. MED. IMAGING (USA), IEEE TRANSACTIONS ON MEDICAL IMAGING, DEC. 1985, USA Bd. MI-4, Nr. 4, Dezember 1985, USA, Seiten 200 - 207**
• **NAPEL S.; DUNNE S.; RUTT B.K.: 'FAST FOURIER PROJECTION FOR MR ANGIOGRAPHY' MAGNETIC RESONANCE IN MEDICINE Bd. 19, Nr. 2, 01 Juni 1991, ACADEMIC PRESS, DULUTH, MN, US, Seiten 393 - 405**

EP 0 947 958 B1

**Beschreibung**

Die Erfindung betrifft ein Verfahren der medizinischen Bilddatenverarbeitung zur Bestimmung von an Gitterstellen eines gewählten Gitters liegenden Ausgangs-Funktionsdaten aus an Gitterstellen eines kartesischen Gitters gegebenen Eingangs-Funktionsdaten sowie eine Anordnung, bei der das Verfahren eingesetzt werden kann.

Bei vielen Anwendungen der Medizintechnik, bei denen medizinische Bilddaten verarbeitet werden, wird ein solches Verfahren benötigt. Beispielsweise ist bei der 2D/3D-Registrierung ein effizienter Weg zur Berechnung von zweidimensionalen Projektionen aus einem dreidimensionalen Datensatz von Interesse. Gegenwärtig wird dazu beispielsweise ein Ray-Tracing-Algorithmus benutzt, bei dem das Integral von Grauwerten innerhalb eines präoperativen 3D-Datensatzes entlang eines Strahls von der Strahlenquelle zu einem Bildpunkt in der Detektorebene (bei der Röntgenbildgebung) berechnet wird. Um ein solches Verfahren intraoperativ einsetzen zu können, muß die Berechnung ausreichend schnell erfolgen, da mehrere Projektionen des präoperativen ' Datensatzes unter verschiedenen Winkeln berechnet und mit aktuell gemessenen Projektionen verglichen werden müssen, um eine 2D/3D-Registrierung durchführen zu können. Außer bei der Röntgenbildgebung wird ein eingangs genanntes Verfahren auch bei anderen Bildgebungsverfahren der Medizintechnik benötigt, wie beispielsweise bei der Magnetresonanztomographie und bei der Röntgen-Computertomographie (CT), insbesondere um Projektionen zu berechnen.

Als Stand der Technik wird angegeben Sandy Napel et al., "Fast Fourier Projection for MR Angiography", Magnetic Resonance in Medicine 19, 394-405 (1991) umfasst eine Fast Fourier Projektion, welche schnell Bilder erzeugt und insbesondere zum Erzeugen von MR- Angiogrammen nützlich ist. Auf der Grundlage der projection-slice Theoreme der Fouriertransformationtheorie extrahiert diese Methode Flächen aus dem 3D Frequenzraum und berechnet Projektionen aus beliebigen Betrachtungswinkeln durch inverse 2D Fouriertransformation. Eine interaktive Auswahl der optimalen Projektionsrichtungen für die Bildgebung der gewünschten Vaskulatur in Angiographiebildern aus einzelnen Ansichten oder aus zwei Ansichten ist möglich.

J.D. O'Sullivan, "A Fast Sinc Function Gridding Algorithm for Fourier Inversion in Computer Tomography", IEEE transactions on Medical Imaging, vol. MI-4, NO.4, December 1985 offenbart einen recheneffizienten Gitteralgorithmus, der bei der direkten Fouriertransformation verwendet werden kann um beliebige niedrige Artefaktniveaus zu erreichen. Dieses Verfahren ist auch geeignet für die Anwendung von anderen Messgeometrien, etwa Fächerstrahlprojektionen, der Defraktionstomographie und NMR Bildgebung. Im Näherungsalgorithmus mit der sinc-Funktion wird eine Faltungsinterpolation gemäß dieses Verfahrens angewendet.

Der Erfindung liegt die Aufgabe zugrunde, ein Verfahren der medizinischen Bilddatenverarbeitung der eingangs genannten Art anzugeben, das insbesondere schneller ist als bekannte Verfahren.

Diese Aufgabe wird durch das in Anspruch 1 angegebene Verfahren der medizinischen Bilddatenverarbeitung gelöst, bei der Spiral-Computertomographie zur Bestimmung von an Gitterstellen eines gewählten Gitters, in einer gewählten Schicht liegenden Ausgangs-Funktionsdaten ($f_o(z)$) aus an Gitterstellen eines Eingangsgitters, in unterschiedlichen Schichten liegenden gegebenen Eingangs-Funktionsdaten ($f(z)$), umfassend die Schritte:

> a) Bestimmung von modifizierten Eingangs-Funktionsdaten ($f'(z)$) durch Faltung der Eingangs-Funktionsdaten ($f'(z)$) an den Gitterstellen des gewählten Gitters mit der Fouriertransformierten ($c(z)$) einer Konvolutionsfunktion ($C(k)$),
> b) Bestimmung der Fouriertransformierten ($F'(k)$) der modifizierten Eingangs-Funktionsdaten ($f'(z)$),
> c) Bestimmung einer modifizierten Fouriertransformierten ($F(k)$) durch Division der Fouriertransformierten ($F'(k)$) durch die Konvolutionsfunktion ($C(k)$), und
> d) Bestimmung der Ausgangs-Funktionsdaten ($f_o(z)$) durch inverse , Fouriertransformation der modifizierten Fouriertransformierten ($F'(k)$), wobei die Konvolutionsfunktion ($C(k)$) eine Wichtungsfunktion ist zur Gewichtung der Gitterstellen des Eingangsgitters entsprechend ihrem Abstand zu Gitterstellen des gewählten Gitters.

Der Erfindung liegt der Gedanke zugrunde, die zeitaufwendige Berechnung von Interpolationen durch einfachere Berechnungsschritte (sog. "resampling") zu ersetzen. An Gitterstellen eines kartesischen Gitters vorliegende Eingangs-Funktionsdaten, z.B. 2D-Objekt-Funktionsdaten im Ortsraum, werden zunächst durch die Fouriertransformierte einer Konvolutionsfunktion dividiert, und von den modifizierten Eingangs-Funktionsdaten wird die Fouriertransformierte bestimmt. Die Konvolutionsfunktion (englisch: convolution kernel; wird auch als Faltungskern bezeichnet) ist dabei eine Art Wichtungsfunktion, mit der die Gitterstellen des kartesischen Gitters entsprechend ihrem Abstand zu einer Gitterstelle des gewählten Gitters gewichtet werden. Die Konvolutionsfunktion wird bei der nachfolgenden Faltung an den Gitterstellen des gewählten Gitters benötigt: die Fouriertransformierte der modifizierten Eingangs-Funktionsdaten wird in diesem Verfahrensschritt mit der Konvolutionsfunktion selbst gefaltet, woraus sich die Ausgangs-Funktionsdaten, z.B. Projektionsdaten auf dem gewählten Gitter, beispielsweise einem polaren Gitter im Frequenzraum ergeben. Die Konvolutionsfunktion ($C(k)$) ist hierbei eine Wichtungsfunktion zur Gewichtung der Gitterstellen des Eingangsgitters entsprechend ihrem Abstand zu Gitterstellen des gewählten Gitters.

Der Hauptvorteil der Erfindung liegt in der deutlich geringeren Rechenzeit: Die Anzahl der erforderlichen Rechenschritte zur Berechnung einer eindimensionalen Projektion ist proportional zu n log n (n: Anzahl der Abtastpunkte) und für eine zweidimensionale Projektion proportional zu $n^2$ log n, während bei herkömmlichen Verfahren die Anzahl der Rechenschritte proportional zu $n^2$ für eindimensionale Projektionen bzw. $n^3$ für zweidimensionale Projektionen ist. Außerdem läßt sich bei verschiedenen Anwendungen des erfindungsgemäßen Verfahrens eine Verbesserung der Bildqualität erreichen.

Bevorzugt wird das erfindungsgemäße Verfahren zur Berechnung von Projektionsdaten auf einem polaren Gitter eingesetzt, bei dem also die Gitterstellen des gewählten Gitters auf radialen, durch den Ursprung des Frequenzraumes führenden Geraden bzw. Ebenen liegen. Aus den Projektionsdaten können auch leicht durch inverse Fouriemansformatiön Funktionsdaten im Ortsraum erhalten werden zur Darstellung eines Bildes

Bevorzugte Anwendung des Verfahrens sind in den Ansprüchen 3 bis 6 angegeben. Je nach Anwendung wird ein entsprechendes Gitter ausgewählt, auf dem die Ausgangs-Funktionsdaten liegen sollen.

Bevorzugt wird als Konvolutionsfunktion eine Kaiser-Bessel-Funktion oder eine Gauß-Funktion verwendet, wobei jedoch andere Funktionen eingesetzt werden können.

Die Reihenfolge der Verfahrensschritte des erfindungsgemäßen Verfahrens kann auch umgedreht werden, ohne daß dies wesentliche Auswirkungen auf das Ergebnis des Verfahrens hat.

Die Erfindung wird nachfolgend anhand der Zeichnung näher erläutert. Es zeigen:

Fig. 1 eine Darstellung von Eingangs-Funktionsdaten im Ortsraum,

Fig. 2 eine Darstellung von Ausgangs-Funktionsdaten im Frequenzraum,

Fig. 3 ein Ablaufschema des erfindungsgemäßen Verfahrens

Fig. 4 ein alternatives Ablaufschema des erfindungsgemäßen Verfahrens,

Fig. 5 eine Darstellung von Projektionsdaten bei der Spiral-Computertomographie,

Fig. 6 eine Darstellung eines Verfahrens zur Bestimmung einer Kegelstrahl-Projektion, bei dem das erfindungsgemäße Verfahren eingesetzt wird und

Fig. 7 eine Anordnung, bei der das erfindungsgemäße Verfahren eingesetzt werden kann.

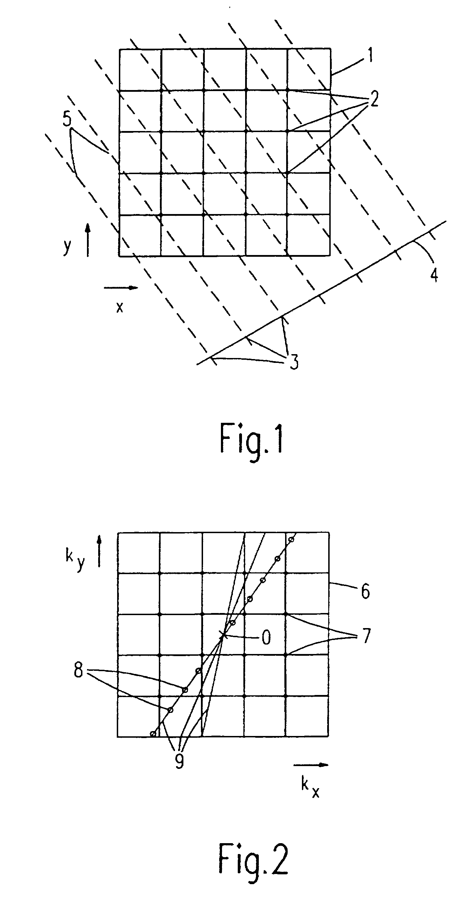

In Fig. 1 ist ein kartesisches Gitter 1 gezeigt, an dessen Gitterstellen 2 Eingangs-Funktionsdaten $I_c(r)$, beispielsweise 2D-Objekt-Funktionsdaten eines Röntgenbildes gegeben sind. Der Index "c" soll im folgenden verdeutlichen, daß es sich um Daten auf einem kartesischen Gitter handelt. Aus den Eingangs-Funktionsdaten $I_c(r)$ sollen Parallelstrahl-Projektionen erstellt werden, d.h., es sollen die Intensitäten entlang paralleler Linien 5 auf eine Gerade 4 projiziert werden. Die Projektionswerte 3 entlang einer solchen Projektionsgeraden 4 bilden eine Projektion.

Wie aus Fig. 1 ersichtlich ist, treffen die Parallelstrahlen 5 im allgemeinen nicht die Gitcerpunkte 2, an denen Eingangs-Funktionsdaten $I_c(r)$ vorhanden sind. Zur Bestimmung von auf den Parallelstrahlen 5 liegenden Funktionsdaten müßte demnach eine Interpolation zwischen vorhandenen Eingangs-Funktionsdaten $I_c(r)$ durchgeführt werden. Auch durch Fouriertransformation in den Frequenzraum würden die Eingangs-Funktiondaten wieder auf Gitterstellen 7 eines kartesischen Gitters 6 liegen (siehe Fig.2). Zur Erstellung einer Projektion, die im Frequenzraum (k-Raum) einer durch den Ursprung O führenden radialen Linie 9 entspricht, müßte also wiederum eine Interpolation der an den Gitterstellen 7 gegebenen Daten durchgeführt werden, um Daten an Abtastpunkten 8 entlang einer radialen Linie 9 zu erhalten.

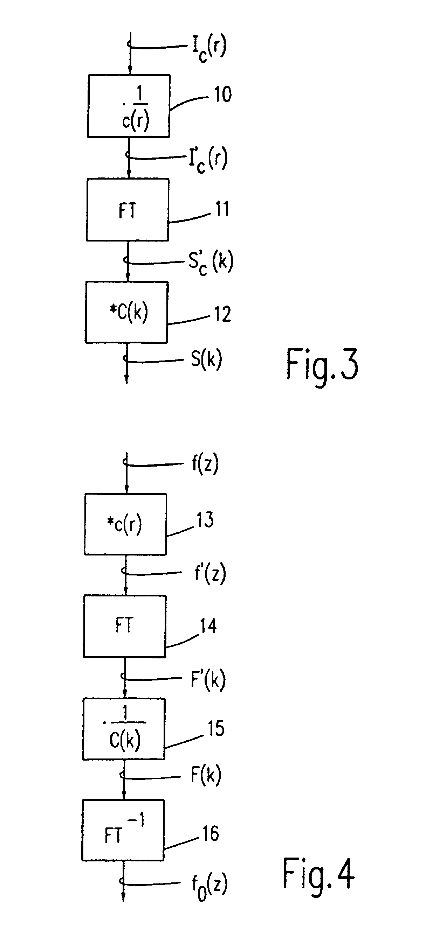

In Fig. 3 ist das Ablaufschema des erfindungsgemäßen Verfahrens zur Bestimmung von Projektionsdaten S(k) im Frequenzraum aus Objekt-Funktionsdaten $I_c(r)$ im Ortsraum dargestellt. In einem ersten Verfahrensschritt 10 werden die Objekt-Funktionsdaten $I_c(r)$ durch die Fouriertransformierte c(r) einer Konvolutionsfunktion C(k) dividiert, woraus sich die modifizierten Objekt-Funktionsdaten $I_c'(r)$ ergeben. Im nächsten Verfahrensschritt 11 wird davon die Fouriertransformierte $S_c'(k)$ bestimmt. Diese wird anschließend im Verfahrensschritt 12 an den Gitterstellen des gewählten Gitters gefaltet mit der Konvolutionsfunktion C(k), woraus sich die Projektionsdaten S(k) im Frequenzraum ergeben, welche nicht mehr auf einem kartesischen Gitter, sondern auf dem gewählten Gitter liegen. Diese können durch inverse Fouriertransformation in Projektionsdaten im Ortsraum umgewandelt werden.

Mathematisch lassen sich die durchgeführten Verfahrensschritte wie folgt beschreiben:

$$I_c'(r) = I_c(r) \,/\, c(r) \qquad\qquad\qquad\qquad \textbf{(a)}$$

$$S_c'(k) = FT\{I_c'(r)\} = S_c(k) * 1/C(k) \qquad\qquad\qquad \textbf{(b)}$$

$$S(k) = S_c'(k) * C(k) = (S_c(k) * 1/C(k)) * C(k) \qquad\qquad (c)$$

Das Verfahren kann allgemein zur Bestimmung (n-1)-dimensionalen Projektionen aus n-dimensionalen Objekt-Funktionsdaten angewandt werden, wobei im Verfahrensschritt 11 jeweils eine n-dimensionale Fourier-Transformation durchzuführen ist. Der Verfahrenssschritt 12 wird in der Fachwelt häufig auch als "resampling" oder "gridding" unter Benutzung einer "convolution interpolation" bezeichnet.

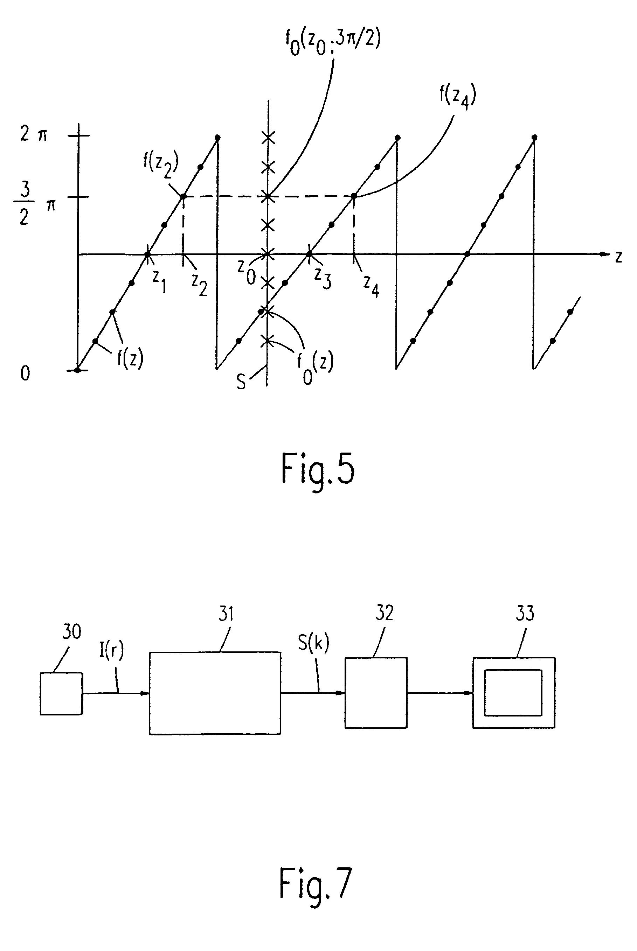

Ein alternatives Ablaufschema des erfindungsgemäßen Verfahrens ist in Fig. 4 gezeigt. Die Anwendung dieses Verfahrensablaufs bei der Spiral-Computertomographie soll anhand von Fig. 5 erläutert werden. Bei dieser wird der Patient während der Röntgenbildaufnahme kontinuierlich durch das Meßfeld in z-Richtung verfahren, wodurch eine Reihe von Spiralvolumendaten (Projektionsdaten) $f(z)$ für unterschiedliche Winkelpositionen der Röntgenröhre erhalten werden. Um ein Schichtbild an einer gewünschten Position $z_0$ zu erstellen, werden die erforderlichen Projektionswerte $f_0(z)$ entlang der Schicht S durch Interpolation beispielsweise aus den beiden benachbarten zur selben Winkelpasition gehörenden Projektionswerten ermittelt. So wird beispielsweise der Projektionswert $f_0(z_0;3/2\pi)$ durch Interpolation aus den Projektionswerten $f(z_2)$ und $f(z_4)$ bestimmt.

Beim erfindungsgemäßen Verfahren ist jedoch keine solche Interpolation erforderlich. In einem ersten Verfahrensschritt 13 werden die Projektionsdaten $f(z)$ mit der Fouriertransformierten $c(r)$ einer Konvolutionsfunktion gefaltet. Die daraus erhaltenen modifizierten Projektionsdaten $f'(z)$ werden anschließend einer Fouriertransformation (Schritt 14) unterzogen. Die Fouriertransformierte $F'(k)$ wird nachfolgend (Schritt 15) durch die Konvolutionsfunktion $C(k)$ dividiert, und durch anschließende inverse Fouriertransformation (Schritt 16) werden die gewünschten Projektionsdaten entlang der Schicht S erhalten. Der Vorteil des erfindungsgemäßen Verfahrens liegt darin, daß keine Unschärfeerscheinungen (blurring-Effekte) in den Bildern auftreten, wie sie bei dem bekannten Verfahren infolge der erforderlichen Interpolationen auftreten.

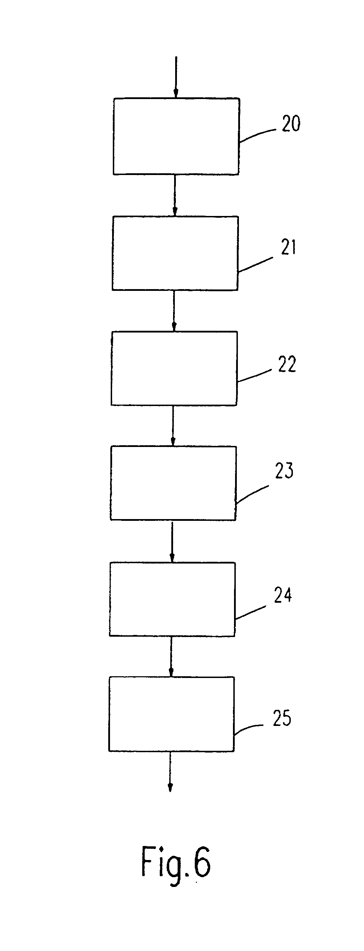

In Fig. 6 ist ein Ablaufschema zur Bestimmung von 2D-Kegelstrahl- oder Fächerstrahlprojektionen aus 3D-Objekt-Funktionsdaren skizziert. Auf die 3D-Objekt-Funktionsdaten wird zunächst (Schritt 20) eine 3D-Fouriertransformation angewandt. Danach (Schritt 21) wird ein 3D-Resampling-Schritt (entspricht Schritt 12 in Fig. 3) ausgeführt, wobei Daten auf radialen, durch den Ursprung des 3D-Frequenzraumes führenden Geraden ermittelt werden. Jede Gerade wird danach (Schritt 22) mit einem eindimensionalen Rampenfilter multipliziert, und durch eindimensionale Fourier-Transformation dieser gefilterten Geraden wird die Radontransformierte entlang dieser Geraden ermittelt. In Schritt 23 wird ein 2D-Resampling-Schritt angewandt, wodurch die Daten auf ein polares 2D-Gitter auf einer Kugelschale abgebildet werden. In Schritt 24 werden diese Daten nachfolgend im wesentlichen durch eindimensionale Fouriertransformation entlang der radialen Geraden, nachfolgende Filterung entlang dieser Geraden und inverse Fouriertransformation auf einem kartesischen Gitter in gewichtete Kegelstrahlprojektionen umgewandelt. Die gewünschte Kegelstrahlprojektion wird schließlich in Schritt 25 durch Projektion der Daten von der virtuellen Ebene auf die reale Ebene (z.B. die Detektorebene bei der Röntgenbildgebung) erhalten. Bei allen genannten Resampling-Verfahrensschritten kann das erfindungsgemäße Verfahren eingesetzt werden.

In Fig. 7 ist symbolisch eine Anordnung dargestellt, bei der das erfindungsgemäße Verfahren eingesetzt werden kann. Dies kann beispielsweise eine CT-Anordnung, ein Röntgengerät oder eine Magnetresonanzanordnung sein. Mittels der Datenerfassungseinheit 30, z.B. einer Detektoranordnung, werden die Eingangs-Funktionsdaten $I_c(r)$ erfaßt, z.B. Intensitätswerte bei der Röntgenbildgebung. Diese werden von einer Verarbeitungseinheit 31 gemäß dem beschriebenen Verfahren und entsprechend der gewünschten Anwendung verarbeitet zu Ausgangs-Funktionsdaten $S(k)$, z.B. zu Projektionsdaten im Funktionsraum. Daraus können in der Bildrecheneinheit 32 Bilddaten ermittelt zur Darstellung von Bildern, z.B. von Projektionsbildern auf einem Monitor 33.

## Patentansprüche

**1.** Verfahren der medizinischen Bilddatenverarbeitung bei der Spiral-Computertomographie zur Bestimmung von an Gitterstellen (8) eines gewählten Gitters, in einer gewählten Schicht (S) liegenden Ausgangs-Funktionsdaten ($f_0(z)$) aus an Gitterstellen (2, 7) eines Eingangsgitters (1, 6), in unterschiedlichen Schichten liegenden gegebenen Eingangs-Funktionsdaten ($f(z)$), umfassend die Schritte:

a) Bestimmung von modifizierten Eingangs-Funktionsdaten ($f'(z)$) durch Faltung der Eingangs-Funktionsdaten ($f'(z)$) an den Gitterstellen des gewählten Gitters mit der Fouriertransformierten ($c(z)$) einer Konvolutionsfunktion ($C(k)$),
b) Bestimmung der Fouriertransformierten ($F'(k)$) der modifizierten Eingangs-Funktionsdaten ($f'(z)$),
c) Bestimmung einer modifizierten Fouriertransformierten ($F(k)$) durch Division der Fouriertransformierten ($F'$

(k)) durch die Konvolutionsfunktion (C(k)), und

d) Bestimmung der Ausgangs-Funktionsdaten ($f_o$(z)) durch inverse Fouriertransformation der modifizierten Fouriertransformierten (F'(k)),

wobei die Konvolutionsfunktion (C(k)) eine Wichtungsfunktion ist zur Gewichtung der Gitterstellen (2, 7) des Eingangsgitters (1, 6) entsprechend ihrem Abstand zu Gitterstellen (8) des gewählten Gitters.

2. Verfahren nach Anspruch 1,
**dadurch gekennzeichnet, dass** die Eingangs-Funktionsdaten (f(z)) in unterschiedlichen Schichten liegende Spiralvolumendaten und die Ausgangs-Funktionsdaten ($f_o$(z)) in einer gewählten Schicht liegende Projektionsdaten sind.

3. Verfahren nach Anspruch 1,
**dadurch gekennzeichnet, dass** die Konvolutionsfunktion (C(k)) eine Kaiser-Bessel-Funktion oder eine Gauß-Funktion ist.

4. Vorrichtung der medizinischen Bilddatenverarbeitung bei der Spiral-Computertomographie zur Bestimmung von an Gitterstellen (8) eines gewählten Gitters, in einer gewählten Schicht (S) liegenden Ausgangs-Funktionsdaten ($f_o$(z)) aus an Gitterstellen (2, 7) eines Eingangsgitters (1, 6) in unterschiedlichen Schichten liegenden gegebenen Eingangs-Funktionsdaten (f(z)), umfassend

a) Mittel (31) zur Bestimmung von modifizierten Eingangs-Funktionsdaten (f'(z)) durch Faltung der Eingangs-Funktionsdaten (f!(z)) an den Gitterstellen des gewählten Gitters mit der Fouriertransformierten (c(z)) einer Konvolutionsfunktion (C(k)),

b) Mittel (31) zur Bestimmung der Fouriertransformierten (F'(k)) der modifizierten Eingangs-Funktionsdaten (f'(z)),

c) Mittel (31) zur Bestimmung einer modifizierten Fouriertransformierten (F(k)) durch Division der Fouriertransformierten (F'(k)) durch die Konvolutionsfunktion (C(k)), und

d) Mittel (31) zur Bestimmung der Ausgangs-Funktionsdaten ($f_o$(z)) durch inverse Fouriertransformation der modifizierten Fouriertransformierten (F'k)),

wobei die Konvolutionsfunktion (C(k)) eine Wichtungsfunktion ist zur Gewichtung der Gitterstellen (2, 7) des Eingangsgitters (1, 6) entsprechend ihrem Abstand zu Gitterstellen (8) des gewählten Gitters.

5. Vorrichtung nach Anspruch 4,
ferner mit Mitteln (30) zur Erfassung der Eingangs-Funktionsdaten (f(z)) und mit Mitteln (32, 33) zur Weiterverarbeitung der Ausgangs-Funktionsdaten ($f_o$(z)) und/oder zur Darstellung von Bildern.

**Claims**

1. A medical image data processing method in spiral computer tomography for determining output function data ($f_o$(z)) lying at grid points (8) of a selected grid in a selected slice (S) from specified input function data (f(z)) lying at grid points (2,7) of an input grid (1,6) in different slices, comprising the following steps:

a) determining modified input function data (f(z)) by convolution of the input function data (f(z)) at the grid points of the selected grid with the Fourier transform (c(z)) of a convolution kernel (C(k)),

b) determining the Fourier transform (F'(k)) of the modified input function data (f'(z)),

c) determining a modified Fourier transform (F(k)) by dividing the Fourier transform (F'(k)) by the convolution kernel (C(k)), and

d), determining the output function data ($f_o$(z)) by inverse Fourier transformation of the modified Fourier transform (F'(k)), where the convolution kernel (C(k)) is a weight function for weighting the grid points (2,7) of the input grid (1,6) in accordance with their distance to grid points (8) of the selected grid.

2. A method as claimed in claim 1, **characterized in that** the input function data (f(z)) are spiral volume data lying in different slices and the output function data ($f_o$(z)) are projection data in a selected slice.

3. A method as claimed in claim 1, **characterized in that** the convolution kernel (C(k)) is a Kaiser-Bessel function or a Gaussian function.

4. An apparatus for medical image data processing in spiral computer tomography for determining output function data ($f_o(z)$) lying at grid points (8) of a selected grid in a selected slice (S) from specified input function data (f(z)) lying at grid points (2,7) of an input grid (1,6) in different slices, comprising:

   a) means (31) for determining modified input function data (f(z)) by convolution of the input function data (f(z)) at the grid points of the selected grid with the Fourier transform (c(z)) of a convolution kernel (C(k)),
   b) means (31) for determining the Fourier transform (F'(k)) of the modified input function data (f (z)),
   c) means (31) for determining a modified Fourier transform (F(k)) by dividing the Fourier transform (F'(k)) by the convolution kernel (C(k)), and
   d) means for determining the output function data ($f_o(z)$) by inverse Fourier transformation of the modified Fourier transform (F'(k)),

   where the convolution kernel (C(k)) is a weight function for weighting the grid points (2,7) of the input grid (1,6) in accordance with their distance to grid points (8) of the selected grid.

5. An apparatus as claimed in claim 4, further comprising means (30) for detecting input function data (f(z)) and means (32, 33) for further processing the output function data ($f_o(z)$) and/or for representing images.

**Revendications**

1. Procédé de traitement de données d'image médicales en cas de tomographie informatisée spiralée en vue de la détermination de données de fonction de sortie ($f_o(z)$) situées aux points de grille (8) d'une grille sélectionnée, dans une couche sélectionnée (S) à partir des données de fonction d'entrée (f(z)) situées sur les points de grille (2, 7) d'une grille d'entrée (1,6) dans différentes couches, comprenant les étapes de :

   a) détermination de données de fonction d'entrée modifiées (f(z)) par convolution des données de fonction d'entrée (f(z)) aux points de grille de la grille sélectionnée avec la transformation de Fourier (c(z)) d'une fonction de convolution (C(k));
   b) détermination de la transformation de Fourier (F'(k)) des données de fonction d'entrée modifiées (f(z));
   c) détermination de la transformation de Fourier modifiée (F(k)) par division de la transformation de Fourier (F'(k)) par la fonction de convolution (C(k)),
   et
   d) détermination des données de fonction de sortie ($f_o(z)$) par transformation de Fourier inverse des transformations de Fourier modifiées (F'(k)),

   la fonction de convolution (C(k)) étant une fonction de pondération pour la pondération des points de grille (2, 7) de la grille d'entrée (1,6) correspondant à leur distance par rapport aux points de grille (8) de la grille sélectionnée.

2. Procédé selon la revendication 1,
   **caractérisé en ce que** les données de fonction d'entrée (f(z)) sont des données de volume spiralé situées dans différente couches et les données de fonction de sortie ($f_o(z)$) sont des données de projection situées dans une couche sélectionnée.

3. Procédé selon la revendication 1,
   **caractérisé en ce que** la fonction de convolution C(k) est une fonction de Kaiser-Bessel ou une fonction de Gauss.

4. Dispositif de traitement de données d'image médicales en cas de tomographie informatisée spiralée en vue de la détermination de données de fonction de sortie ($f_o(z)$) situées aux points de grille (8) d'une grille sélectionnée, dans une couche sélectionnée (S) à partir des données de fonction d'entrée (f(z)) situées sur les points de grille (2, 7) d'une grille d'entrée (1,6) dans différentes couches, comprenant :

   a) des moyens (31) de détermination de données de fonction d'entrée modifiées (f(z)) par convolution des données de fonction d'entrée (f(z)) aux points de grille de la grille sélectionnée avec la transformation de Fourier (c(z)) d'une fonction de convolution (C(k));
   b) des moyens (31) de détermination de la transformation de Fourier (F'(k)) des données de fonction d'entrée modifiées (f(z));

c) des moyens (31) de détermination d'une transformation de Fourier modifiée (F(k)) par division de la transformation de Fourier (F'(k)) par la fonction de convolution (C(k)),
et

d) des moyens (31) de détermination des données de fonction de sortie ($f_o(z)$) par transformation de Fourier inverse de la transformation de Fourier modifiée (F'(k)),

la fonction de convolution (C(k)) étant une fonction de pondération pour la pondération des points de grille (2, 7) de la grille d'entrée (1,6) correspondant à leur distance par rapport aux points de grille (8) de la grille sélectionnée.

5. Dispositif selon la revendication 4,
comprenant par ailleurs des moyens (30) pour la saisie des données de fonction d'entrée (f(z)) et avec des moyens (32, 33) pour le traitement des données de fonction de sortie ($f_0(z)$) et/ou pour la représentation d'images.

Fig.1

Fig.2

Fig.3

Fig.4

Fig.5

Fig.7

Fig.6